# EUROPÄISCHE PATENTANMELDUNG

(11) **EP 1 347 108 A2**
(43) Veröffentlichungstag der Anmeldung: **24.09.2003**
(21) Anmeldenummer: 03004121.4
(22) Anmeldetag: 26.02.2003
(51) Int. Cl.: E04B 1/66

(54) **Flächiges Dichtmaterial mit Haftschicht**

(30) Priorität: 22.03.2002 DE 20204592 U
(71) Anmelder: Schomburg GmbH System-Baustoffe, 32760 Detmold (DE)
(72) Erfinder: Watermann, Heinfried, 32805 Horn-Bad Meinberg (DE)
(74) Vertreter: Elbertzhagen, Otto, Dipl.-Ing., Patentanwalt

(57) **Zusammenfassung**

Bei einem flächigen Dichtmaterial mit Haftschicht handelt es sich um ein Dichtmaterial zum Abdichten gegen Wasser oder Feuchtigkeit, welches inbesondere im Baubereich Verwendung findet. Es besteht aus einer Kunststoffbahn oder -folie (1) mit einer zumindest einseitig darauf aufgebrachten Haftschicht (2). Ein solches Material soll einfach herzustellen sein, und es soll bei diesem Material die Haftschicht (2) nur unwesentlich auftragen sowie eine feine Verteilung der einzelnen Haftpunkte mit hoher Flächendichte aufweisen. Dazu besteht die Haftschicht (2) aus einem mineralischen Streugut, dessen Partikel mit der Oberfläche der Kunststoffbahn oder -folie (1) fest verbunden sind.

## Beschreibung

Die Erfindung bezieht sich auf ein flächiges Dichtmaterial insbesondere zur Verwendung im Baubereich zum Abdichten gegen Wasser oder Feuchtigkeit, bestehend aus einer Kunststoffbahn oder -folie mit einer zumindest einseitig darauf aufgebrachten Haftschicht.

Ein solches Dichtmaterial in Gestalt von Dichtbahnen oder -folien wird vornehmlich an und in Gebäuden oder sonstigen Bauwerken verwendet, um gegen Wasser oder Feuchtigkeit abzudichten. Eine derartige Abdichtung kann großflächig vorgenommen werden, wie beispielsweise an Feucht- und Naßräumen, an Kellerräumen, an Dächern, Becken oder sonstigen Bauwerks- und Anlageteilen. Es kann auch eine nur partielle Abdichtung in Betracht kommen, wie sie bei der Ab- und Eindichtung von Fugen in und zwischen Gebäuden, Bauwerken oder sonstigen Bauteilen erforderlich ist.

Neben einer losen Verlegung werden die genannten Bahnen oder Folien vollflächig verklebt. Bei Dichtbahnen aus einer Kunststoffbahn ohne aufgebrachte Haftschicht geschieht dies unter Verwendung von Heißbitumen, was voraussetzt, daß der verwendete Kunststoff bitumenverträglich ist. Bei Dichtbahnen oder -folien der eingangs genannten Art, bei denen auf der Kunststoffbahn oder -folie eine zumindest einseitige Haftschicht vorgesehen ist, erfolgt die Anbringung unter Verwendung von insbesondere zementgebundenen Klebern. Hierbei dient die auf die Kunststoffbahn oder -folie aufgebrachte Haftschicht als Haftbrücke, die zur sicheren Verbindung zum Untergrund vor allem bei der Verwendung zementgebundener Kleber notwendig ist.

Bei Dichtbahnen oder -folien in bekannter Ausführung besteht die Haftschicht auf der Kunststoffbahn aus einem Vlies oder einem textilen Material, wie einem Gewirk oder Gewebe, welches einerseits mit dem Kunststoffmaterial fest verbunden ist und andererseits eine mechanische Verkrallung mit dem Klebstoff ermöglicht. Die Herstellung von mit einem textilen Werkstoff oder einem Vlies kaschierten Kunststoffbahnen ist aufwendig, weil dieses Beschichtungsmaterial nicht beliebig verfügbar ist, denn es muß in einem gesonderten Prozeß produziert werden. Außerdem zieht eine derartige Haftschicht eine gewisse Sperrwirkung bei der fertigen Kunststoffbahn oder -folie nach sich, wodurch die Biege- und Dehnfähigkeit beeinträchtigt sein kann.

In Gestalt von Dachpappe gibt es bereits ein Bahnmaterial anderer Art, bei dem die Beschichtung auf die Biege- und Dehnfähigkeit keinen Einfluß hat. Hier besteht die Beschichtung aus einer Besandung, die jedoch an derjenigen Seite der Dachpappenbahn aufgebracht ist, die nicht die zu verklebende Seite ist. Bei Dachpappenbahnen hat die Besandung vielmehr den Zweck, die im Verlegezustand freiliegende Seite gegen mechanische Belastungen zu stabilisieren, insbesondere die verlegte Dachpappe begehbar zu machen.

Der Erfindung liegt die Aufgabe zugrunde, ein flächiges Dichtmaterial der gattungsgemäßen Art zu schaffen, das einfach herzustellen ist und bei dem die Haftschicht nur unwesentlich aufträgt und eine feine Verteilung der einzelnen Haftpunkte mit hoher Flächendichte aufweist.

Diese Aufgabe wird bei einem flächigen Dichtmaterial der gattungsbildenden Art nach der Erfindung dadurch gelöst, daß die Haftschicht aus einem mineralischen Streugut besteht, dessen Partikel mit der Kunststoffoberfläche fest verbunden sind.

Für die Erfindung ist von Bedeutung, daß die Haftschicht an der betreffenden Seite der flächigen Kunststoffbahn oder -folie aus einer sozusagen mineralisierten Oberfläche besteht, die einen feinrauhen Charakter hat. Entsprechend wird als Mineral ein feinkörniges Streugut in Form von Mehl oder Granulat verwendet, wofür z.B. Quarzsand in Betracht kommt.

Grundsätzlich eignet sich ein erfindungsgemäßes Dichtmaterial zur Verwendung mit beliebigen Klebern. Besondere Vorteile ergeben sich bei der Verklebung mit einem mineralischen, in der Regel zementgebundenen Kleber auf dem betreffenden Untergrund, denn die mineralisierte Oberfläche ist latent hydraulisch und wird bei der

Hydratation des zementgebundenen Klebers mit ihren mineralischen Partikeln in dessen Kristallstruktur eingebunden. Man erreicht hierbei Haftzugwerte, die mehr als das Doppelte derjenigen Haftzugwerte betragen, die man mit den herkömmlichen vlieskaschierten Kunststoffbahnen oder -folien erreicht.

Das neue Dichtmaterial in Gestalt eines flächigen Gebildes kann zu einzelnen Dichtstreifen oder -bändern aufgeteilt oder zu Formteilen, wie Manschetten, verformt sein, was vom jeweiligen Verwendungszweck abhängt. Für das Bahn- oder Folienmaterial kommt ein solcher Kunststoff in Betracht, der eine ausreichende Biege- und Dehnfähigkeit hat, um beispielsweise über Bewegungsfugen zwischen Gebäuden und Bauteilen hinweg ohne die sonst übliche Schlaufenbildung verlegt werden zu können. Die aus dem mineralischen Streugut bestehende Haftschicht beeinträchtigt die Dehnfähigkeit der Kunststoffbahn oder -folie nicht. Die Dehnfähigkeit der Kunststoffbahn oder -folie kann in der Längs- und/oder Querrichtung vorgesehen werden.

Des weiteren weisen die verwendbaren mineralischen Streugüter eine hohe Beständigkeit gegenüber Chemikalien auf, und auch die mechanische Festigkeit des Kunststoffmaterials wird durch die mineralische Haftschicht erhöht. Letztlich sind die verwendbaren mineralischen Streugüter physiologisch unbedenklich, weshalb für Kunststoffbahnen oder -folien der in Rede stehenden Art eine Trinkwasserzulassung erlangt werden kann.

Der Körnungsgrad des auf die Kunststoffbahn oder die Kunststoffolie aufgebrachten mineralischen Streugutes ist so ge-wählt, daß eine hohe Flächendichte an der betreffenden Oberseite des Dichtmaterials erzielt ist. Demgemäß wird ein Körnungsgrad gewählt, der dem eines Mehles oder eines feinkörnigen Granulates entspricht. Das mineralische Streugut kann mit dem Kunststoff verklebt oder auch darin eingeschmolzen sein. Entscheidend ist, daß eine mineralisierte Oberfläche entsteht, die eine gute Verträglichkeit mit Klebstoffen zeigt, die insbesondere jedoch eine hohe Affinität zu zementgebundenen Klebstoffen aufweist.

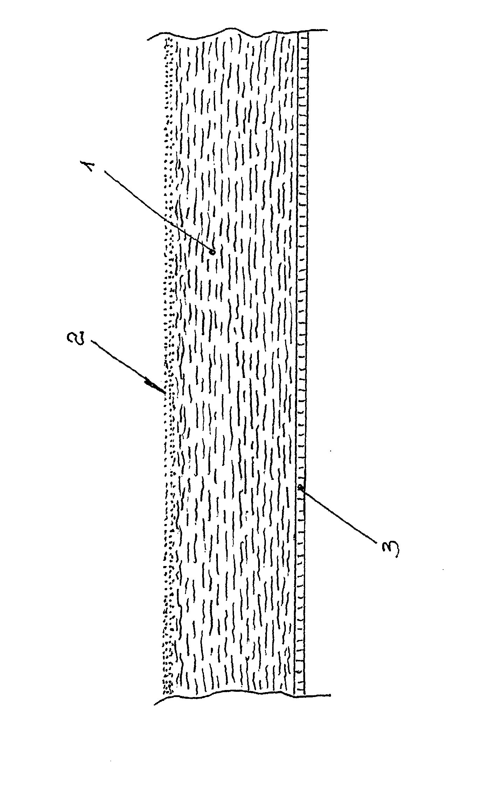

Die Erfindung wird nachfolgend noch kurz anhand der Zeichnung an einem Ausführungsbeispiel erläutert. Die Zeichnung zeigt den Querschnitt durch einen Abschnitt eines flächigen Dichtmaterials.

Schematisch ist in der Zeichnung ein Abschnitt einer Kunststoffbahn 1 wiedergegeben, die wasserundurchlässig bzw. feuchtigkeitsabsperrend ist. Die Bahn 1 besteht aus einem elastischen, dehnfähigen Kunststoffmaterial, welches des weiteren ausreichend biegsam oder ausgehend von einem flächigen Ausgangszustand dreidimensional, gegebenenfalls unter Dehnung, verformbar ist.

Auf die eine Außenseite der Kunststoffbahn 1, die bei geringer Dicke als Kunststoffolie zu bezeichnen ist, ist eine Haftschicht 2 aufgebracht, die aus einem feinkörnigen, mineralischen Stoff besteht. Das Streutgut ist in Form eines Mehles oder eines feinkörnigen Granulates auf die Oberfläche der Kunststoffbahn 1 aufgebracht und dort entweder mit dem Kunststoffmaterial so verklebt oder in das Kunststoffmaterial so eingeschmolzen, daß die mineralischen Partikel nur mit einem Teil ihrer Oberfläche eingebunden sind. In der Regel überdeckt die Haftschicht 2 die gesamte Fläche an der betreffenden Oberseite der Kunststoffbahn 1. So bildet die Haftschicht 2 eine mineralisierte Oberfläche des bahnförmigen Dichtmaterials, die in Gestalt der freiliegenden Oberseiten der andererseits an- oder eingebundenen mineralischen Partikel eine nahezu unendliche Anzahl feinverteilter Haftpunkte aufweist.

Eine solche Haftschicht 2 kann auch an der zweiten Oberfläche der Kunststoffbahn 1 angeordnet sein. Beim Ausführungsbeispiel hingegen ist auf die zweite Oberfläche der Kunststoffbahn 1 eine Selbstklebeschicht 3 aufgebracht. So kann beispielsweise das flächige Dichtmaterial mittels der auf die eine Oberfläche aufgebrachten Selbstklebeschicht 3 auf eine Betonwand, einen Wandputz oder dergleichen aufgeklebt werden, wonach auf die Haftschicht 2 an der zunächst freiliegenden Oberseite des flächigen Dichtmaterials Keramik- oder Kunststofffliesen insbesondere mittels eines zementgebundenen Klebers aufgeklebt werden.

## Patentansprüche

1. Flächiges Dichtmaterial insbesondere zur Verwendung im Baubereich zum Abdichten gegen Wasser oder Feuchtigkeit, bestehend aus einer Kunststoffbahn oder -folie mit einer zumindest einseitig darauf aufgebrachten Haftschicht,
**dadurch gekennzeichnet,**
**daß** die Haftschicht (2) aus einem mineralischen Streugut besteht, dessen Partikel mit der Oberfläche der Kunststoffbahn oder -folie (1) fest verbunden sind.

2. Dichtmaterial nach Anspruch 1,
**dadurch gekennzeichnet,**
**daß** die Partikel des mineralischen Streugutes mit der Oberfläche der Kunststoffbahn oder -folie (1) verklebt sind.

3. Dichtmaterial nach Anspruch 1,
**dadurch gekennzeichnet,**
**daß** die Partikel des mineralischen Streugutes in die Oberfläche der Kunststoffbahn oder -folie (1) eingeschmolzen sind.

4. Dichtmaterial nach einem der Ansprüche 1 - 3,
**dadurch gekennzeichnet,**
**daß** der Körnungsgrad des mineralischen Streugutes der Haftschicht (2) dem eines Mehles oder feinkörnigen Granulates entspricht.

5. Dichtmaterial nach einem der Ansprüche 1 - 4,
**dadurch gekennzeichnet,**
**daß** die Haftschicht (2) vollflächig auf die betreffende Oberfläche der Kunststoffbahn oder -folie (1) aufgebracht ist.

6. Dichtmaterial nach einem der Ansprüche 1 - 5,
**dadurch gekennzeichnet,**
**daß** die Kunststoffbahn oder -folie (1) in Längsund/ oder Querrichtung dehnbar ist.

7. Dichtmaterial nach einem der Ansprüche 1 - 6,
**dadurch gekennzeichnet,**
**daß** die Kunststoffbahn oder -folie (1) an ihrer einen Seite mit der Haftschicht (2) und an ihrer anderen Seite mit einer Selbstklebeschicht (3) versehen ist.

8. Dichtmaterial nach einem der Ansprüche 1 - 7,
**dadurch gekennzeichnet,**
**daß** die mit der Haftschicht (2) versehene Kunststoffbahn oder -folie (1) in einzeln zu verwendende Abschnitte aufgeteilt ist.

9. Dichtmaterial nach Anspruch 8,
**dadurch gekennzeichnet,**
**daß** die Kunststoffbahn oder -folie (1) in Gestalt von Bändern oder Streifen aufgeteilt ist.

10. Dichtmaterial nach Anspruch 8,
**dadurch gekennzeichnet,**
**daß** die aufgeteilte Kunststoffbahn oder -folie (1) zu Formteilen, wie zu Manschetten, verformt ist.
